# EUROPEAN PATENT APPLICATION

(11) **EP 1 633 032 A1**
(43) Date of publication of application: **08.03.2006**
(21) Application number: 05255305.4
(22) Date of filing: 30.08.2005
(51) Int. Cl.: H02K 3/20

(54) **Windings for electrical machines**

(30) Priority: 01.09.2004 GB 0419406
(71) Applicant: SWITCHED RELUCTANCE DRIVES LIMITED, Harrogate, North Yorkshire HG3 1PR (GB)
(72) Inventor: Randall, Steven Paul, Leeds, LS16 8BS (GB)
(74) Representative: Hale, Peter

(57) **Abstract**

An electrical machine is provided with coils which are interconnected to form one or more windings. The coils are made up of at least two sub-coils, connected in series, the sub-coil closest to the airgap having strands in each turn which have a smaller cross sectional area than the strands in the turns in other sub-coils. This arrangement reduces the high-frequency loss in the windings while minimising any penalty associated with introducing stranding to the coil.

## Description

The present invention generally relates to the construction of windings for electrical machines. More particularly, the present invention relates to the use of multi-strand windings in machines having salient poles.

When a current, I, flows in the winding of an electrical machine, there is a power loss due to the resistance of the conductor. Where the resistance of the conductor, R, is measured under conditions of low- or zero-frequency, the loss is given by I²R and is called the "DC" or "zero-frequency" loss. However, when the conductor is exposed to time-varying magnetic fields, the situation is considerably more complex. Additional losses arise due to one or more of the following:
- the time rate of change of the field inside the conductor associated with a current in the same conductor,
- the time rate of change of the field inside the conductor associated with a current in a neighbouring conductor ― the so-called proximity effect, and
- the time rate of change of the field inside the conductor associated with an externally imposed field due, for example, to a neighbouring iron boundary.

All of the above give rise to circulating currents within the conductor, called "eddy currents" and hence produce additional loss in the conductor. This additional loss is known variously as "AC" loss, "eddy current" loss or "high-frequency" loss. It can be many times the DC loss in the conductor.

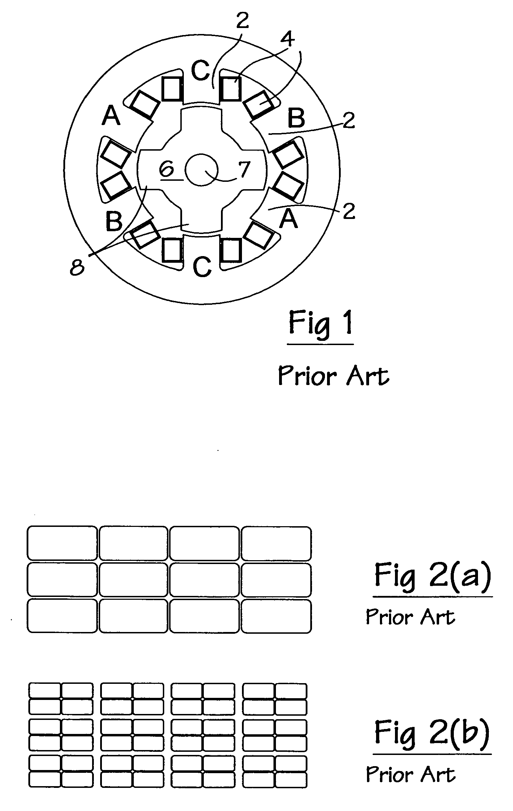

Some electrical machines are more susceptible to this loss than others, e.g. those with magnetically salient structures have magnetic field patterns which have a high rate of change due to the motion of the rotor. By way of example, Figure 1 shows a part section of a rotating switched reluctance machine. The salient stator poles 2 are each surrounded by a coil 4, which, when interconnected to form phase windings A,B,C and when connected to a source of excitation, set up a magnetic field in the machine. As the rotor 6 rotates with its shaft 7, a rotor pole 8 comes into line with the stator pole 2 and all the turns in the coil 4 experience a time-varying field. This is especially so for those turns near the tip of the stator pole, which experience the greatest change in field. Large, low-voltage and fast electrical machines tend to require relatively large cross sectional areas for their conductor and to require relatively few turns per coil. This leads to coils made up of a few turns of large-section conductor ― an arrangement which exacerbates the creation of AC loss.

While various methods are available for calculating these losses (ranging from classical analytical formulae to 2D and 3D finite element numerical methods), there is a need to minimise the losses, rather than simply evaluate their magnitude. Various methods are known to reduce the AC loss, as will be described below.

A simple method is to keep the coil well back from the airgap by reducing the cross-section of the conductor used for the coil. However, this immediately increases the DC loss in the coil.

Another method is to divide the conductor into at least two strands and wind the coil with these strands in parallel. The strands are insulated from each other and connected only at the ends of the coil. This is illustrated in Figure 2, where the conductor of the coil of Figure 2(a) has been divided into four strands in Figure 2(b). (The clearances between the turns of the coil have been exaggerated for clarity.) Of course, the requirement to insulate the strands from each other brings an immediate penalty in that the space required for the insulation is generally taken from that otherwise available for the conductor cross-section, so the effective cross-section of the conductor is reduced. Thus, even if the AC loss is reduced because the stranding has reduced the eddy currents in the coil, the DC loss is generally increased because the total conductor cross section has reduced.

It should be noted that in Figure 2 and throughout this specification, neither the insulating coating on the conductors nor the insulation around the poles of the stator is shown, for the sake of clarity. Those skilled in the art will recognise that in practice these would be present in the machine.

Simple stranding as described above, however, may introduce other problems of circulating currents. If the voltage induced in each strand by the time-varying magnetic fields is not identical, the difference in the induced voltages will drive a circulating current around the strands when they are connected at their ends. Although the voltage may be small, the effective resistance of the path is also small, so large circulating currents can be generated, leading to large losses. The strands, therefore, have to be arranged in positions so that the total voltage induced in each one is equal. Much ingenuity has gone into methods of twisting and/or positioning the strands during the manufacture of the coils to ensure equality of induced voltages. While this can be achieved with relative ease on small machines using thin conductors, the production of coils for larger machines using large conductors can be extremely costly. In the largest sizes of machines, it entails forming rigid bar conductors into complex, three-dimensional shapes, insulating them and pressing them into place to make up the coil. This process accounts for a significant part of the overall machine cost.

Another approach to reduction of high-frequency losses is to use conductors which consist of a number of insulated wire strands twisted or woven together. The twisting or weaving can be simple, but is often complex. In all cases the aim is to expose each strand to the same magnetic field, so that the overall magnetic field acts equally on all the strands and causes the total current to be distributed equally among them. This construction, usually referred to as "litz wire", is often used in the windings of high-frequency transformers and inductors to increase their efficiency. However, the use of litz wire has two drawbacks. Firstly, the cost of the cable is high, so using it for a large machine would entail considerable cost. Secondly, because it is typically finely stranded, it has a poor ratio of conductor to overall space occupied, even if compacted after weaving, i.e. its DC resistance is high relative to the total cross section of the conductor, thus increasing the zero-frequency loss.

There is therefore a need for a practicable method of winding large electrical machines while addressing both the DC and the AC loss.

The present invention is defined in the accompanying independent claims. Preferred features of the invention are recited in the claims respectively dependent thereon.

Embodiments of the present invention provide a coil for an electrical machine which is made up of at least two sub-coils. In this way the designer is able to optimise the distribution of turns between the sub-coils to balance the DC and AC loss considerations according to the proportion of turns in one sub-coil relative to the other(s). Preferably, the sub-coils are connected in series to ensure that they carry the same current. Such embodiments of the invention provide a technique for minimising the AC loss in those turns where the AC loss is highest while avoiding an unnecessary increase in the DC loss in other turns of the winding.

In one embodiment of the invention, a coil of a phase winding is divided into two or more sub-coils which are connected in series to make up the complete coil. At least one of the sub-coils has conductors comprising more than one strand.

Preferably, the first sub-coil is located farther away from the rotor (or other equivalent moving part) of an electrical machine than the second sub-coil. The strands of the second sub-coil are preferably thinner than those of the first sub-coil. In one embodiment, the second sub-coil is made out of litz wire, but other types of conductor could be used. Preferably, the depth of the first sub-coil in a direction in which the sub-coils are arranged on one another is more than the depth of the second sub-coil. An appropriate material for the strands of the sub-coils is copper as in conventional windings for electrical machines. However, it is also possible to use other electrically conductive materials, such as aluminium which is cost-effective in some applications.

The invention also extends to a method of winding a coil for a stator of an electrical machine, comprising winding a first sub-coil of a first number of strands and a second sub-coil of a second number of strands and connecting the sub-coils in series. In another embodiment, the method extends to inserting the first sub-coils into the stator, inserting the second sub-coils into the stator and then connecting them together to form a phase winding.

Other aspects and advantages of the invention will become apparent upon reading the following detailed description of exemplary embodiments of the invention and upon reference to the accompanying drawings, in which:
Figure 1 shows a cross section of an electrical machine;
Figure 2(a) shows a cross-section of a known coil;
Figure 2(b) shows a cross-section of another known coil; and
Figure 3 shows a partial cross section of a machine according to one embodiment of the invention.

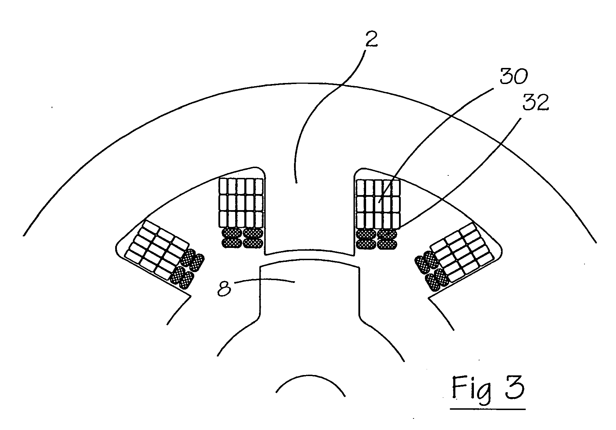

Figure 3 shows a cross section of a coil in accordance with one embodiment of the invention. The coil, mounted on a stator pole 2, is made up from a stack of two sub-coils 30, 32. In this exemplary embodiment, the first sub-coil 30 comprises 15 turns, arranged in five layers of three turns per layer of solid rectangular strip insulated copper conductor, as commonly used for winding the coils of electrical machines of the larger sizes. The second sub-coil 32 comprises four turns arranged in two layers of two turns/layer. The second sub-coil 32 is made from litz wire, for example each turn is made up of 76 strands of 0.8mm insulated wire woven from four sub-conductors of 19 strands each, as available from wire suppliers such as Von Roll Isola of Zurich, Switzerland. As an alternative, the turns of the first sub-coil 30 can also be made up of strands. The insulation for the strands of litz wire can be a coating of, for example, magnet wire enamel. The litz wire can also be overtaped with, for example, a polyester tape or a yarn, such as nylon, silk or glass.

The two sub-coils 30,32 are connected in series so that they carry the same current. In the exemplary embodiment of Figure 3, this gives 19 turns per complete coil. The connection between the sub-coils can be done in the end region of the machine, in a fashion similar to the interconnection of the coils to form the phases. The complete coil may be connected in series or in parallel with other complete coils on other poles to form phase windings in the usual way, e.g. by connecting the diametrically opposite coils of the 6-pole structure shown in Figure 1 to form three independent phase windings.

The arrangement shown in Figure 3 has several advantages over the prior art. It will be noted that sub-coil 32, having only a few turns, is less costly than making the complete coil out of litz wire. Also, since it only forms part of the complete coil, it contributes less to DC loss. Nevertheless, because the litz wire sub-coil is nearer the airgap of the machine than the sub-coil 30 with the solid conductor, a very significant reduction in AC loss is achieved.

The two sub-coils can be joined together either before or after being placed on the pole, whichever is the more convenient in any manufacturing situation. It may, however, be beneficial to take advantage of the fact that if the complete set of first sub-coils is inserted before any of the second sub-coils, slightly larger wire can be used for the first sub-coil, thus further reducing the DC loss.

A further advantage of the arrangement shown in Figure 3 is that the second sub-coil can extend nearer the airgap than would be considered judicious for a non-stranded (i.e. single filament) coil, without suffering as large a penalty in AC loss as would otherwise be expected. This benefit is exploited by increasing the cross-section of the strands of the second sub-coil and thereby reducing the DC loss.

The number of turns in each of the sub-coils and the size of conductor used is a matter for the designer of the machine. In general, the optimum distribution of turns between the two sub-coils balances the increase in DC loss associated with the litz winding with the greater decrease achieved in the AC loss, so that overall the total loss in the coil is minimised. It will be appreciated that there is a law of diminishing returns associated with increasing the proportion of the turns in the litz sub-coil, since a smaller proportion of the turns lie near the airgap.

In one embodiment, one quarter of the total turns and one third of the available area are allocated to the litz coil, allowing the designer then to specify the exact dimensions of the conductors in the two coils.

In another embodiment of the invention, sub-coil 32 is made from roped conductor. Roped conductor is a much simpler and less expensive form of litz wire, being formed from a relatively small number of insulated strands which are twisted together in a controlled fashion, rather than woven. While not providing the greater benefit of the more complex forms of litz wire, it is considerably cheaper and does not require such complex equipment to produce it.

The skilled person will appreciate that variation of the disclosed arrangements are possible without departing from the invention. More than two densities of strands per unit cross-sectional area may be present, i.e. the coil may be subdivided into three or more sub-coils. More than one of the sub-coils can be made from stranded conductors, e.g. in one embodiment the first sub-coils are made from roped conductor and the second sub-coils are made from woven litz wire. The conductors used for the sub-coils may be another suitable metal or other conductor.

Likewise, linear machines use a winding comprising at least one coil. The present invention is equally applicable to such machines. The moving part of a linear machine is commonly also referred to as a 'rotor'. Accordingly, the above description of several embodiments is made by way of example and not for the purposes of limitation. It will be clear to the skilled person that minor modifications can be made to the arrangements without significant changes to the operation described above. The present invention is intended to be limited only by the scope of the following claims.

## Claims

1. A coil for an electrical machine comprising:
a first sub-coil comprising a first number of strands of conductor; and
a second sub-coil, connected in series with the first sub-coil, comprising a second number of strands of conductor in which the cross-sectional area of each of the strands in the second sub-coil is smaller than the cross-sectional area of each of the strands in the first sub-coil.

2. A coil as claimed in claim 1 in which the number of the strands of the second sub-coil is equal to or greater than that of the first sub-coil.

3. A coil as claimed in claim 1 or 2 in which the volume of the second sub-coil is less than the volume of the first sub-coil.

4. A coil as claimed in claim 1, 2 or 3 in which the depth of the second sub-coil in the direction in which the sub-coils are arranged in relation to one another is less than the depth of the first sub-coil.

5. A coil as claimed in any of claims 1 to 4 in which the second sub-coil comprises litz wire.

6. A coil as claimed in claim 5 in which the first sub-coil comprises litz wire.

7. An electrical machine having at least one winding of at least one coil as claimed in any of claims 1 to 6.

8. An electrical machine as claimed in claim 7 having at least one coil comprising more than two sub-coils.

9. A machine as claimed in claim 7 or 8, including a rotor and a stator, the coil being arranged so that the second sub-coil is nearer the rotor than the first sub-coil.

10. A machine as claimed in claim 7, 8 or 9, including at least one magnetically salient pole, the coil being arranged on the said pole.

11. A method of making an electrical machine including arranging coils as claimed in any of claims 1 to 6 in relation to magnetically salient poles of the machine and interconnecting the coils to form one or more phase windings.

12. A method as claimed in claim 11 in which a set of the first sub-coils is arranged in relation to the poles of the electrical machine before a set of the second sub-coils.
